Europäisches Patentamt

European Patent Office

Office européen des brevets

(11) Publication number: **0 429 202 A2**

# EUROPEAN PATENT APPLICATION

(21) Application number: 90311966.7

(51) Int. Cl.⁵: **H04M 1/72**

(22) Date of filing: **01.11.90**

| | |
|---|---|
| The title of the invention has been amended (Guidelines for Examination in the EPO, A-III, 7.3). | (71) Applicant: **SALORA OY** **PL 14** **SF-241 01 Salo(FI)** |
| (30) Priority: **01.11.89 FI 895200** | (72) Inventor: **Vänttinen, Mika Tapio** **Kellonsoittajankatu 3-7 E 112** **SF-20500 Turku(FI)** |
| (43) Date of publication of application: **29.05.91 Bulletin 91/22** | |
| (84) Designated Contracting States: **AT BE CH DE DK ES FR GB GR IT LI NL SE** | (74) Representative: **Barlow, Roy James et al** **J.A. KEMP & CO. 14, South Square, Gray's Inn** **London WC1R 5LX(GB)** |

(54) Wireless telephone system.

(57) A telephone system comprising a telephone device (1), which is connected to the telephone network and which includes the functions of a telephone set, and an operating device (2) communicating with the telephone device through a wireless duplex IR signal connection. Preferably the speech transmission is realized with an FM modulated IR signal, and the function selection commands with pulse modulated IR signals. The operating device (2) further comprises keys for the control of another remotely controllable electronic device (3). This other electronic device is e.g. a TV receiver and/or a video recorder, a CD record player, an audio system, the lights i a room, a household appliance or the like.

Fig. 1

EP 0 429 202 A2

## TELEPHONE SYSTEM

The subject of the present invention is a telephone system comprising a telephone device, which is connected to the telephone network and includes the functions of a telephone set, and an operating device cooperating with the telephone device via a wireless duplex IR signal connection.

An arrangement of this type is known e.g. from patent application EP-27833. This publication describes in detail how the pulse transformers and the IR transmitters and receivers are arranged in both units, i.e. in the telephone device and in the operating device, respectively.

An IR connection in a telephone system has in comparison to known radio frequency connections also the advantage that generally no approval from the authorities is required, and further the IR arrangement has a simpler configuration.

The object of the present invention is now to expand the above mentioned known system so that it, is possible with a single operating device to control the telephone device and also another electronic device.

The invention is thus characterized in, that the operating device also comprises second key functions in order to control another electronic device. This other could be e.g. a television receiver, a video recorder, and auxiliary satellite receiver, a CD record player, an antenna control device, an audio system, the lights in a room, a household appliance or the like.

Thus it could concern e.g. a parallel wireless telephone connected to the television remote controller. With such a device breaks are avoided, caused for example by telephone calls while an interesting TV program is being watched.

The telephone device itself must naturally be located so, that it is within the range of the operating device. It may be located e.g. beside the television, and it should be connected to the normal telephone jack and to the mains.

The operating device replaces the remote controller belonging to the TV set and it is slightly bigger and heavier than the remote controller. Naturally it is provided with a headphone and a microphone in the same way as a normal operating device for a telephone. The transmission of the speech from the operating device requires a fairly high power. The power supply therefore requires accumulators, which are charged e.g. in a desk-top equipment, when the operating device is not in use.

In practice it is most convenient to arrange the speech transmission to be effected with an FM modulated IR signal and the dialling commands in the same way as e.g. the TV receiver control commands with a pulse modulated IR signal. It has been found that TV commands do not significantly interfere with the speech traffic, and also that an FM modulated voice signal does not interfere with the transmission of TV commands. Naturally the distance between the IR carriers should be sufficiently large, e.g. 150 kHz.

The invention and its other features and advantages are described below in more detail as an example and with reference to the accompanying drawings, in which

figure 1 shows the principle of the system according to the invention,

figure 2 shows the whole system in a schematic diagram,

figure 3 shows in a schematic diagram an implementation of the operating device, and

figure 4 shows accordingly in a schematic diagram an embodiment of the telephone device.

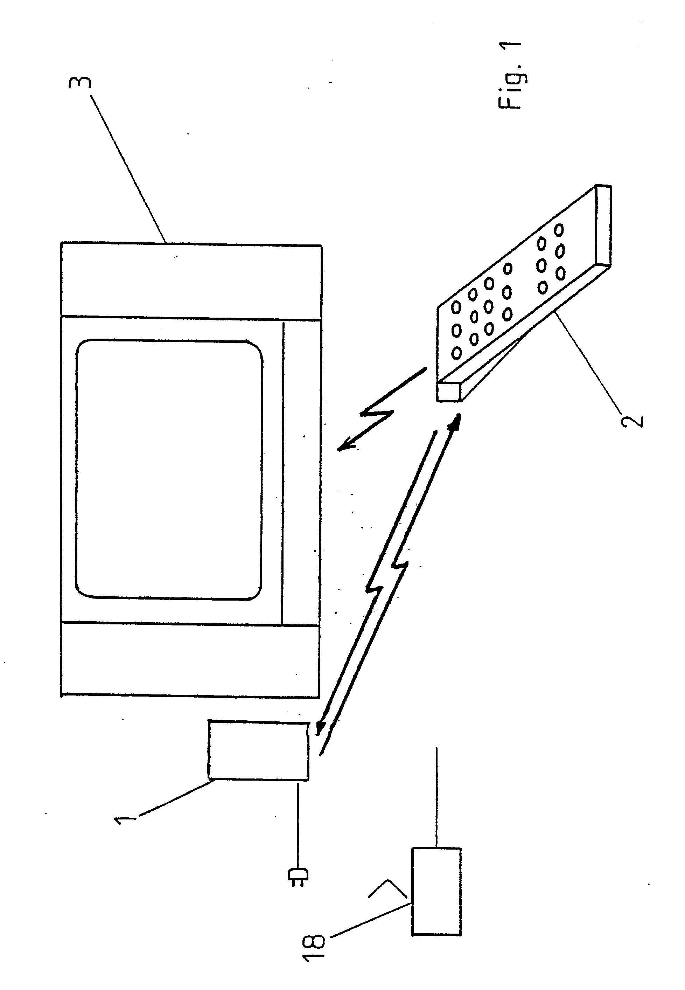

In figure 1 there is shown at reference numeral 1 a telephone device including all functions of a normal telephone as well as some other functions to be described closer below. The reference numeral 2 refers to an operating device operating with IR signals, the device controlling both the telephone device 1 and the TV receiver 3. The telephone device 1 is connected with a cord to the telephone jack 18, and it is located so that it is possible to control both the telephone device and the TV receiver with the same operating device 2.

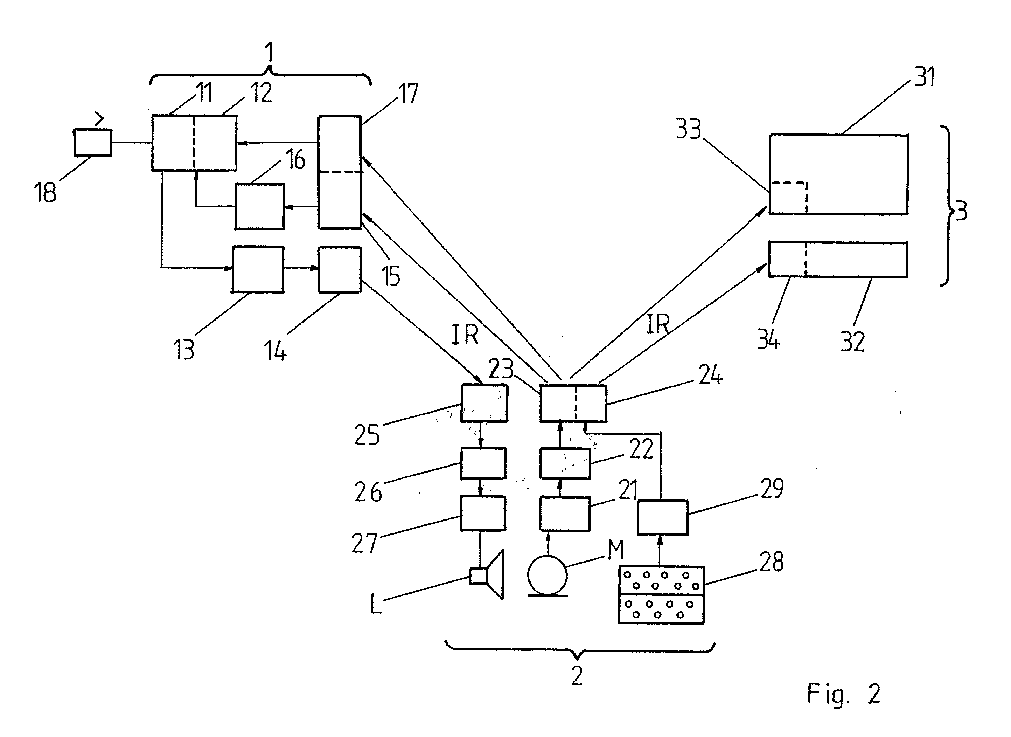

Figure 2 shows a schematic diagram of the system. The telephone device 1 comprises a main unit 11 provided with all functions of a telephone set and a programmable dialling unit. The main unit further comprises a microprocessor 12 translating the IR commands and controlling the dialling of the telephone device. An incoming voice signal to the telephone unit 11 is connected through the FM modulator 13 to the IR transmitter 14. Accordingly the incoming FM modulated IR signal first arrives at the IR receiver 15 and then at the FM demodulator 16 and from there further to the telephone unit 11. The dialling commands, which are pulse code modulated IR signals, are received in the IR receiver 17 and from there further in the microprocessor 12 which translates them.

The operating device 2 has in the usual way a microphone M and a loudspeaker L. The signal from the microphone is first connected via an amplifier 21 to the FM modulator 22 and then further to the IR transmitter 23. Accordingly the incoming FM modulated IR signal is received in the IR receiver 25, then further to the IR demodulator 26 and via the amplifier 27 to the loudspeaker L.

The operating device further has a keyboard 28, whose signals are connected via the pulse code modulator 29 to the IR transmitter 24.

The keyboard 28 of the operating device is either a double one, or the keys have double functions, which on one hand control the function commands of the telephone device and which on the other hand control the TV receiver 31 and the video recorder 32. The last-mentioned devices have an IR receiver 33, 34 to receive the pulse code modulated IR control signals. Obviously other corresponding devices may be controlled with IR signals from the operating device.

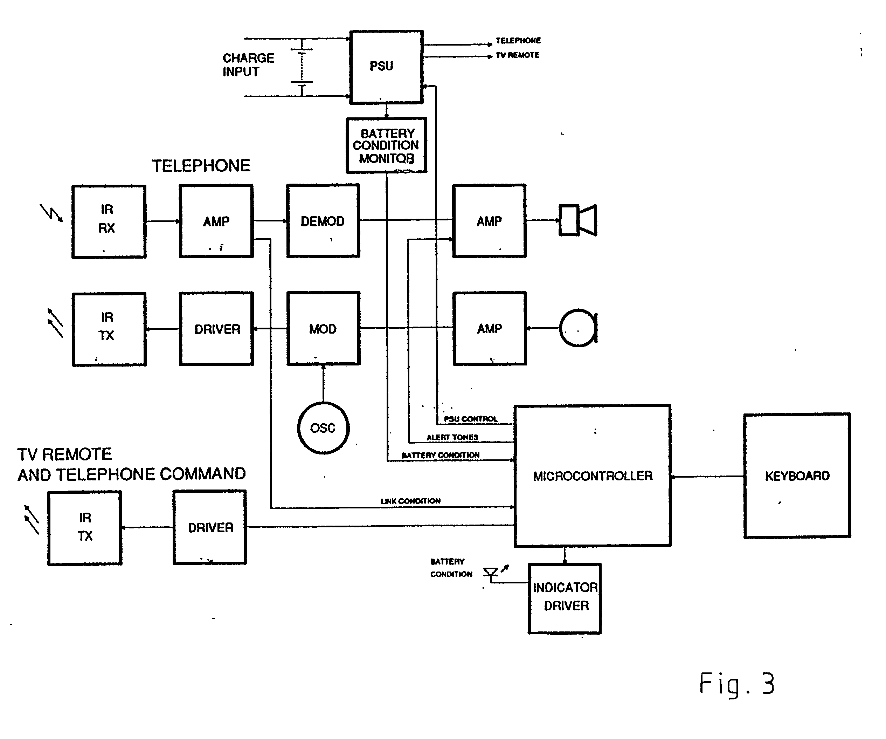

In figure 3 there is shown a possible block diagram of the operating device. A microprocessor connected to the keyboard provides for the pulse code modulation of the commands and it generates a flow of data in serial mode to be further connected to the IR transmitter.

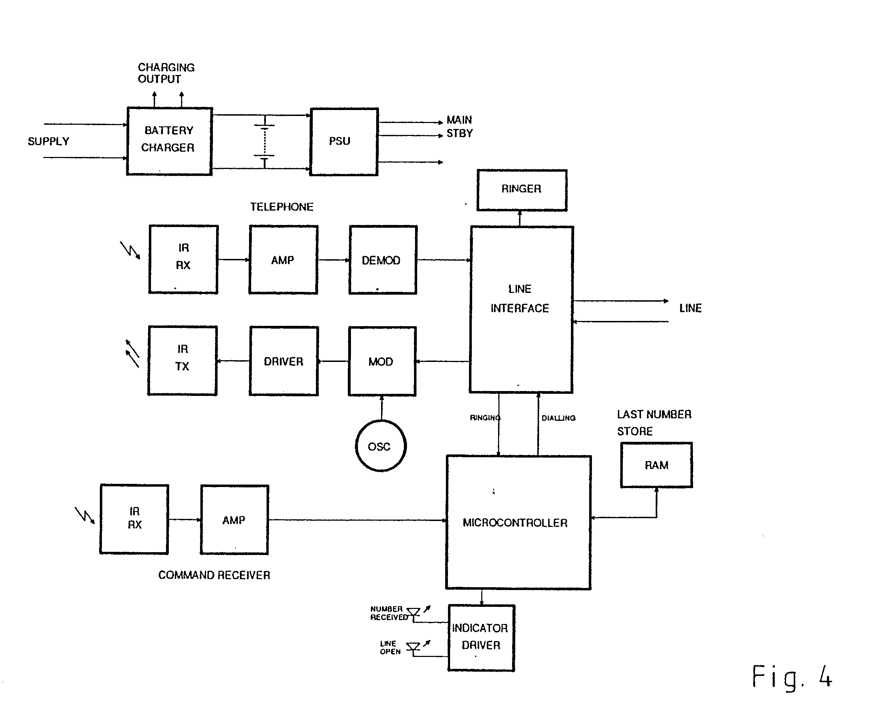

In figure 4 there is accordingly shown an implementation of the telephone device or desk-top device. To the microprocessor is connected a RAM memory for repeating the last number. The memory may naturally contain other frequently occurring numbers. An interface, which can be a more or less standard circuit, provides for sufficient isolation between the TV commands and the telephone traffic.

## Claims

1. Telephone system comprising a telephone device (1), which is connected to the telephone network and which includes the functions of a telephone set, and an operating device (2) cooperating with the telephone device via a wireless duplex IR signal connection, **characterized** in that the operating device (2) further contains second key functions for the control of another remotely controllable electronic device (3).

2. A telephone system according to claim 1, **characterized** in that the speech transmission is realized with FM modulated IR signals and the function selection commands with pulse modulated IR signals.

3. A telephone system according to claim 1 or 2, **characterized** in that the operating device (2) comprises at least the following parts, namely
- a microphone (14) and a preamplifier (21),
- an FM modulator (22) and an IR transmitter (23),
- a second IR transmitter (24) for the transmission of pulse modulated keyboard commands,
- an IR receiver (25) and an FM demodulator (26),
- an amplifier (27) and an earphone (L),
- a keyboard (28) for controlling the telephone device (1) and for controlling an remotely controllable electronic device (3), and accumulators.

4. A telephone system according to claim 1 or 2, **characterized** in that the telephone device (1) comprises at least the following parts, namely
- a telephone set (11) with programmable dialling,
- an FM modulator (13) and an IR transmitter (14),
- an IR receiver (15) and an FM demodulator (16),
- a second IR receiver (17) for the reception of pulse modulated function selection commands,
- a microprocessor (12) which translates said commands and controls the dialling of the telephone device.

5. A telephone system according to claim 4, **characterized** in that the telephone device (1) further comprises a power supply and an a charging device for the accumulators of the operating device.

6. A telephone system according to claim 1, **characterized** in that the said other electronic device is a TV receiver (31) and/or a video recorder (32).

7. A telephone system according to claim 1 or 6, **characterized** in that an IR transmitter (24) of the operating device (2), operating to transmit pulse modulated signals, is shared to transmit commands both to the telephone device (1) and to said electronic device (3).

8. A telephone system according to claim 7, **characterized** in that the function selection commands for the telephone device (1) and the control commands for the other electronic equipment (3) are distinguished from each other by different IR command addresses.

Fig. 1

Fig. 2

Fig. 3

EP 0 429 202 A2

Fig. 4

EP 0 429 202 A2